# EUROPEAN PATENT SPECIFICATION

(11) **EP 1 084 941 B1**
(45) Date of publication and mention of the grant of the patent: **02.11.2006**
(21) Application number: 00119754.0
(22) Date of filing: 11.09.2000
(51) Int. Cl.: B62D 33/02

(54) **Loading space on transport vehicles**
Laderaum von Transportfahrzeugen
Espace de chargement de véhicules de transport

(30) Priority: 16.09.1999 SE 9903313
(43) Date of publication of application: 21.03.2001
(73) Proprietor: Hultdins System AB, 930 70 Mala (SE)
(72) Inventor: Hultdins System AB, 930 70 Mala (SE)
(74) Representative: Onn, Thorsten

(56) References cited:
- DE-A- 2 262 094
- DE-A- 2 318 682
- DE-B- 1 017 477
- DE-U- 7 442 137

## Description

In the forestry industry, different kinds of transport vehicles are used to move logs from the forest to the tracks for transport, commonly roads, and onwards to buyers or retailers or to processing stations.

A forwarder is a transport vehicle that is designed for the initial transport of logs from the forest to the road where timber trucks of the long distance type usually take over. A forwarder is in principle a tractor that is integrated with a load-carrier and it is intended for transporting logs over terrain. At one end it has a cabin and a motor with associated control and adjustment devices. At the other end there is a loading space on which the logs are placed. Between the cabin and the loading space, there is usually a lifting device in the form of a crane.

Many demands are placed on a forwarder. A forwarder should be cost effective and transport large quantities of logs in a short time, at the same time as loading, transport and unloading should be safe both from a reliability point of view and to improve the working environment of the person who drives the forwarder.

A forwarder is driven in the forest terrain and on simpler kinds of roads. The total weight of a forwarder affects its driving characteristics and therefore there are established values for the maximum loading weight for different types of forwarder. The maximum loading weight is also affected by the construction design of the machine.

The forwarders that are found today have an outer dimension that is suited to allow the forwarder to primarily be driven in forest terrain where there are often tight spaces. A forwarder has a fixed loading width that largely coincides with the distance between the outer edges of a pair of wheels, which makes it easier for the driver to drive the forwarder in the forest terrain. This fixed loading width has its advantages, but there are also disadvantages. When the loading space is narrow, the height is instead utilised to make it possible to load the maximum loading weight and make the transport cost effective. This causes the outfit to be high and therefore easy to tip over on uneven ground and during tight turns. It can be time consuming and costly if a forwarder tips over in the forest. It takes a long time to re-sort and reload the logs onto the forwarder and there is a risk for injury to the timber, the forwarder and the driver. The risk that a forwarder might inadvertently tip over means that the functional speed of transport for a fully-loaded forwarder today is around 2 km/hr.

The speed can be increased if the height of the load is reduced. There are thus two ways to drive a loaded forwarder; to drive a few, time-consuming trips with a fully-loaded forwarder and many risk factors, or many, somewhat faster trips with a partially-loaded forwarder and fewer risk factors. Judging which is the most suitable is a task for the driver. Neither of these two ways results in the transport capacity of the forwarder being utilised to its maximum.

Within the forestry industry, there is a wish to increase efficiency and thereby increase profits. A large gain in profitability can be won by utilising the full capacity of all machines and by reducing transport times and thereby transport costs. Nevertheless, it is impossible to do this with the forwarders of today and at the same time avoid the negative and costly effects named above.

DE 7 442 137 U shows a loading space on a transport vehicle of the forwarder type including at least one load-carrying cross-section and upright side-limiting units arranged at the load-carrying unit where the side limiting units are displaceable so that the width of the loading space can be varied. To displace the units a moveable unit is used comprising parts acting in a telescoping way and being part of the load-carrying cross-section. This construction comprises a cylinder and is a bit complicated to use and it can not easily be attached to an existing transport vehicle.

The invention that will be described here offers the possibility to utilise the maximum loading weight of a forwarder at the same time as the forwarder can be provided with improved driving characteristics so that the transport time can be reduced. The invention also has a simple, easily attached and used construction.

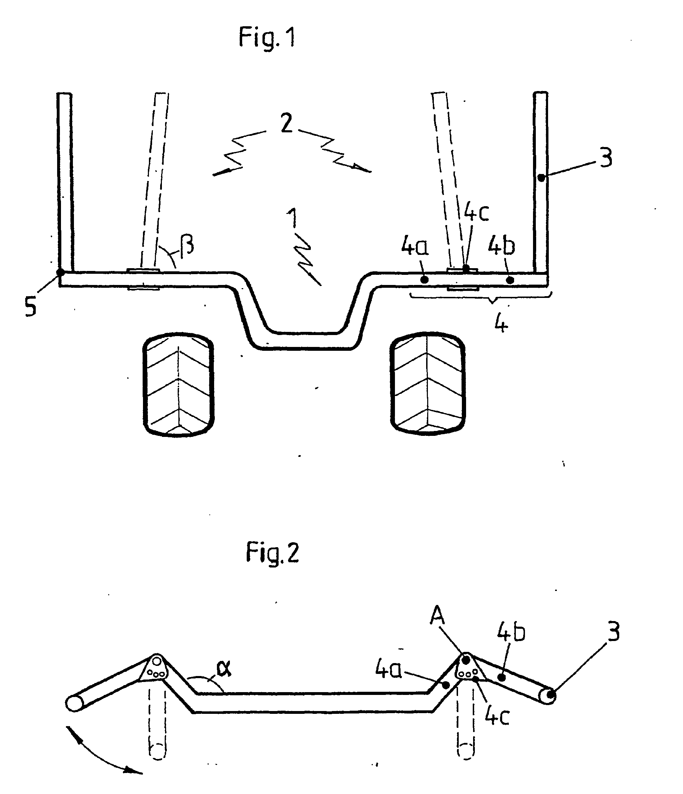

The invention relates to a loading space on a transport vehicle with the characteristics as specified in claim 1. One embodiment of the invention will be described below with reference to the figures, where **Fig. 1** shows the units that limit the loading space of a forwarder seen from the rear end of the forwarder, with two different adjustments of the side-limiting units, **Fig. 2** shows the units that limit the loading space seen from above with the side-limiting units in equivalent positions, **Fig. 3** shows a specific design solution for the side-limiting units and **Fig. 4** shows a loading space where the side-limiting units are located in a mid-position.

More specifically, the invention relates to an adjustable loading space on a forwarder. The loading space is adjustable in that the side-limiting units of the loading space are displaceable so that the width of the loading space can be varied. The possibility of making the loading space wider means that the forwarder can be adapted to different conditions at different working sites. The capacity of the forwarder can thus be utilised to the maximum under the conditions that prevail.

The maximum loading weight must still not be exceeded when the load is widened and thus the total height of the load will be reduced, whereby the centre of gravity for the forwarder will be displaced downwards, whereby the risk that the outfit will tip over is reduced. The speed of the forwarder can thus be increased. It is also easier for the driver to see the loading space when it is wider, which further simplifies driving the forwarder forwards in a forest where there is room for it.

In addition to winning time during the actual transport, many working moments will be made more efficient and time-saving. Loading will be easier and quicker when the loading space is widened and the loading height lowered, whereby the uppermost logs in the load do not need to be lifted so high. Sorting of the logs is made easier when the sorting space is widened and this in turn simplifies the unloading of the load. When the timber that is loaded is dry and thus has a lower volumetric weight, the maximum loading weight can be utilised as the available loading volume above the struts increases when the distance between the struts increases.

In this embodiment, the loading space has, as is normal, at least two units that limit the loading space that each include an essentially horizontal log carriage 1 and at least two units 2 that limit the sides.

Log carriage 1 constitutes a load-carrying cross-sectional piece onto which the logs are placed and on which they rests during the transport. The log carriage can be made from a beam or similar. The log carriage can be designed so that it divides the loading space into longitudinal compartments that allow logs to be sorted as they are loaded onto the forwarder. Each side-limiting unit 2 includes a strut 3 and an arm 4. In a previously known manner, the struts 3 around the loading space of the forwarder prevent the logs from rolling off from the forwarder and also indicate the permitted loading height. Each strut 3 has an ordinary design and is joined with the arm 4 at an attachment point 5 in a previously known manner which is not to be described in detail here. Arm 4 constitutes a part of or an extension of log carriage 1. The arm 4 is displaceable and makes it possible to move the strut 3 out from the body of the forwarder, whereby the width of the loading space increases. The arm 4 includes an inner part 4a that is attached at one end of the log carriage and an outer part 4b on which the strut is attached. The two parts of the arm are attached to one another through a jointed construction 4c. The jointed construction includes pivoting axle A around which the two arm parts 4a and 4b can be rotated in relation to one another. As in a previously known manner, pivoting axle A can comprise a vertical axle that is arranged in circular openings in the ends of the two arm parts that face the joint.

The inner part 4a of the arm forms a part of the actual log carriage 1 or an extension of log carriage 1. The inner arm part 4a is angled in the horizontal plane in relation to the longitudinal direction of the log carriage. If the inner part 4a of the arm constitutes a part of the log carriage 1, its outer end is formed so that it has the shape and angle α that is desired. In the case where the log carriage 1 and the inner arm part 4a constitute two separate parts, the arm part 4a is firmly attached at the end of the log carriage 1 by, for example, welding. The log carriage 1 and the inner arm part 4a can be preformed, for example, cut obliquely, at the ends that are to be joined together to offer better abutment against one another. The angle of attachment α and the lengths of the two parts 4a and b of the arm are such that the point of attachment 5 of the strut in all of the locked working positions of the strut is located on or near to the longitudinal axis of the beam. The inner arm part 4a is angled forward in such a manner that its jointed end points towards the front of the forwarder.

The outer arm part 4b can pivot in relation to the inner part 4a due to the joint 4c. When the outer arm part 4b is swung in towards the forwarder so that its longitudinal axle is parallel with the side of the forwarder, the loading space acquires the width and volume that is normally found on a forwarder. When the outer arm part 4b is swung out from the forwarder, the loading space acquires an increased width and volume in relation to that normally found on a forwarder.

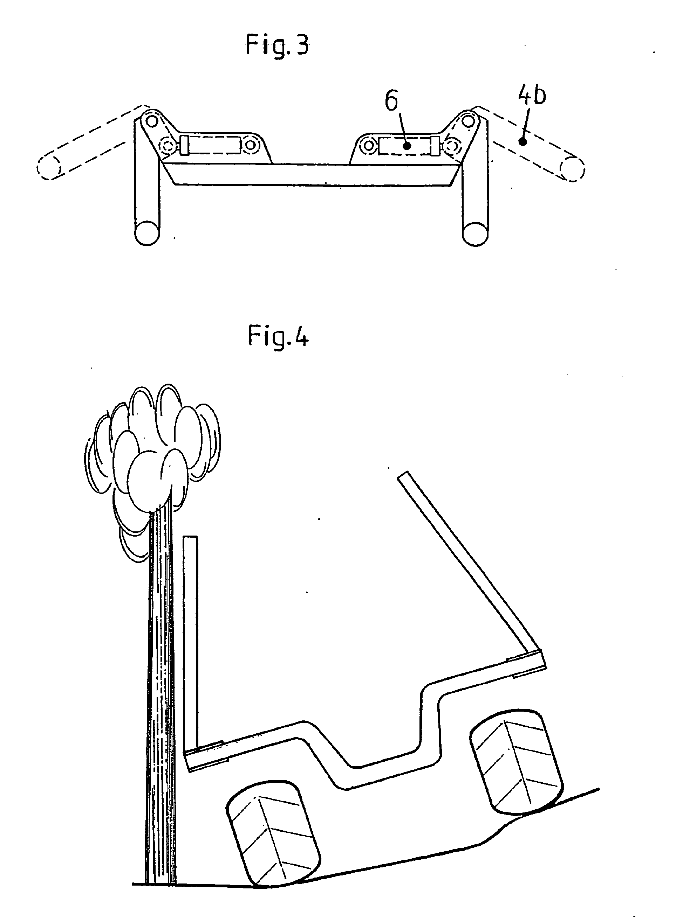

The strut 3 is normally angled slightly at its point of attachment 5 to the log carriage. When outer arm part 4b is swung in towards the side of the forwarder, the upper part of the strut is angled in towards the loading space so that the loading space is greater at the bottom part of the loading space than at its upper part. At its point of attachment 5, or a bit up from this, the strut 3 is angled at an angle β in relation to the arm 4. The forming of the loading space that this provides, and thus the stack of logs, results in a lowering of the centre of gravity of the forwarder. When outer arm part 4b is swung out from the side of the forwarder to its outermost position, the upper part of the strut is angled in a plane that is parallel with the outer side of the loading space, whereby the horizontal cross-sectional surface area is the same at the bottom of the loading space as at the top. The upper part of the strut is then angled towards the rear of the forwarder. When outer arm part 4b is locked in a mid-position, the upper part of the strut is still somewhat angled in towards the loading space. The loading space in the bottom part has increased in that the arm has extended the log carriage 1 while the loading space is still limited at its upper part. This means that the loading space has increased in volume at the same time as the centre of gravity has remained unchanged or been moved downwards in the forwarder. The side of the loading space still has a certain slope that offers free passage at trees or similar if the underlying surface is uneven and the forwarder sways somewhat (see Fig. 4).

Arm part 4b can be swung out so that its centre axis lies parallel with the longitudinal axis of the log carriage. As the inner part 4a of the arm is angled in a forward direction towards the front of the forwarder, the strut 3 can be swung in towards the forwarder at the same time as the arm part is moved backwards towards the rear of the forwarder. For the strut to be able to be swung out from the forwarder, the arm part must be moved outwards/forwards.

The movement and locking of the arm 4 and thereby the strut 3 in relation to the log carriage 1 and the forwarder in general can take place in different ways. The movement can take place manually through the strut and/or the outer arm part 4b being grasped and rotated around the axis of rotation of the joint. Alternatively, the movement can take place with the aid of hydraulic or pneumatic devices arranged to act between the forwarder and the arm. The movement can take place by continuously variable adjustment or in predetermined steps. The locking is adapted to the means by which the movement takes place. The embodiment of the invention has a mechanical locking device that is operated manually. The locking device includes holes in the outer and inner arm parts and a cotter pin. At least one hole in the outer arm part is placed centrally over at least one similar hole in the inner arm part, after which the cotter pin is introduced into the opening that is thus formed and locks the two parts in relation to one another. The hole passes vertically through the inner and outer arm part and the position of the strut is locked by the cotter pin being inserted downwards in a setup of interacting holes in the two arm parts. If the movement takes place with the aid of hydraulic or pneumatic devices, it is appropriate that the locking device is adapted to this design and thus includes hydraulic or pneumatic control and locking devices.

It is appropriate that the locking of the position of a side-limiting unit yields a little so that when unit 2 is subjected to loading on the outside, for example, during contact with a tree, stump or similar, it can be brought to displace somewhat to reduce the risk of mechanical damage to the forwarder and its component parts. Unit 2 should, after being locked in position in relation to the log carriage 1, have a fixed position that clearly limits the maximum loading width decided on at that time. Nevertheless, unit 2 should be able to move in towards the forwarder so that the loading width can be temporarily decreased for the forwarder to be able to pass an obstruction without having to take evasive action or another route. This function of sprung regulation to move the side-limiting unit 2 out of the way can be obtained through mechanical, hydraulic and pneumatic designs. If the movement and locking of the arms takes place via hydraulic or pneumatic devices, it is possible, with the help of further control or locking devices, to obtain adjustable stop positions for the unit and at the same time retain the possibility for the unit to move inwards towards the forwarder when forces are applied from the outside. Fig. 3 shows a hydraulic cylinder 6 that is attached between the outer arm 4b and the log carriage 1. The hydraulic cylinder 6 can be locked in an adjustable position that prevents further outwards movement of the outer arm part 4b at the same time as the outer arm part 4b is allowed to move inwards in situations where an outer force abuts the arm. It is primarily lighter collisions that can be parried in this way. The design is adapted to parry knocks against trees, stumps or similar along the path of the forwarder and assumes that the forwarder moves forwards in its normal direction of travel.

Further embodiments are possible within the concept of the invention according to claim 1. The side-limiting units can be pushed/pulled out in relation to the log carriage through, for example, telescopic operation.

The execution and design of the arrangement that makes it possible to widen the loading space is to a large extent guided by the design and construction of the log carriage. The log carriage has often been formed so that it dips down between the pair of wheels to make it possible to place the load as low as possible and lower the centre of gravity of the outfit yet still retain the ground clearance of the vehicle at the wheels. The outer section of the log carriage that can be provided with a displaceable side-limiting unit thus often has a length that is equivalent to the width of the wheel. If the side-limiting unit is to be pushed/pulled out along this part, this means that the total loading width on either side of the forwarder will only be able to be increased by an amount that is less than the width of a wheel.

The example of the embodiment with the pivoting side-limiting units makes it possible to widen the loading space irrespective of the design of the beam otherwise. The length of the arm parts determines the width of the loading space that can be obtained. The lengths can be varied between different forwarders and according to different wishes without the costs of manufacture being significantly affected.

The displaceable side-limiting units described can constitute a standard for newly manufactured forwarders when the log carriage is adapted to this design from the beginning. It is also possible to add the displaceable side-limiting units to existing forwarders. Appropriate modifications that then need to be made are sizing, cutting, strengthening, etc.

This description should not be viewed as limiting the invention. It merely constitutes a guide to a full understanding of the invention according to claim 1.

## Claims

1. Loading space on a transport vehicle of the forwarder type including at least one load-carrying cross-section, a so-called log carriage (1), and upright side-limiting units (2) arranged at this, wherein each side-limiting unit (2) comprises a strut (3) attached to an adjustable and lockable arm (4) that makes it possible to adjust the strut (3) and lock it in different positions so that the width of the loading space can be varied
**characterised in that** the arm (4) comprises
an inner part (4a) that constitutes or forms a part of the log carriage (1) and is angled in the horizontal plane in relation to the longitudinal direction of the log carriage,
an outer part (4b) to which the strut (3) is attached and
a jointed construction (4c) that links the two arm parts (4a, 4b) and that allows rotation of the outer arm part (4b) in relation to the inner arm part (4a) in a horizontal plane.

2. Loading space according to claim 1 **characterised in that** the angle of attachment α and the lengths of the two parts (4a, 4b) of the arm are such that the point of attachment (5) of the strut in all of the locked working positions of the strut is located on the longitudinal axis of the log carriage.

3. Loading space according to claim 1 or 2 **characterised in that** the inner arm part (4a) is angled forward in such a manner that the jointed end points towards the front of the forwarder.

4. Loading space according to any of claims 1-3 **characterised in that** the locking of the position of a side-limiting unit (2) relative to the log carriage (1) yields a little so that the unit (2) is moveable inwards towards the forwarder when outer loads are applied.

5. Loading space according to any of claims 1-4 **characterised in that** the strut (3) is angled in such a manner that when the outer arm part (4b) is swung in towards the side of the forwarder, the upper part of the strut (3) is angled in towards the loading space so that the loading space is greater at the bottom part of the loading space than at its top part.

## Patentansprüche

1. Laderaum auf einem Transportfahrzeug des Forwarder-Typs, mit mindestens einem lasttragenden Querelement, einem sogenannten Langholzträger (1), und daran angeordneten aufrechten Seitenbegrenzungseinheiten (2), wobei jede Seitenbegrenzungseinheit (2) eine Stütze (3) aufweist, welche an einem verstellbaren und arretierbaren Arm (4) befestigt ist, der die Verstellung der Stütze (3) und deren Arretierung in unterschiedlichen Stellungen gestattet, so dass die Breite des Laderaums veränderlich ist,
**dadurch gekennzeichnet, dass** der Arm (4)
einen inneren Teil (4a) aufweist, der einen Teil des Langholzträgers (1) bildet und in der waagrechten Ebene in Bezug auf die Längsrichtung des Langholzträgers abgewinkelt ist,
einen äusseren Teil (4b), an dem die Stütze (3) befestigt ist, und
eine Gelenkanordnung (4c), welche die zwei Armteile (4a, 4b) miteinander verbindet und eine Drehung des äusseren Armteils (4b) bezüglich dem inneren Armteil (4a) in einer waagrechten Ebene gestattet.

2. Laderaum nach Anspruch 1, **dadurch gekennzeichnet, dass** der Befestigungswinkel α und die Lδnge der beiden Teile (4a, 4b) des Arms derart gewählt sind, dass der Befestigungspunkt (5) der Stütze in allen arretierten Arbeitsstellungen der Stütze auf der Längsachse des Langholzträgers liegt.

3. Laderaum nach Anspruch 1 oder 2, **dadurch gekennzeichnet, dass** der innere Armteil (4a) derart nach vorne abgewinkelt ist, dass das Gelenkende zur Vorderseite des Forwarders gerichtet ist.

4. Laderaum nach einem der Ansprüche 1-3, **dadurch gekennzeichnet, dass** die Arretierung der Stellung einer Seitenbegrenzungseinheit (2) bezüglich dem Langholzträger (1) ein wenig nachgibt, so dass die Einheit (2) unter der Einwirkung äusserer Kräfte nach innen zum Forwarder hin bewegbar ist.

5. Laderaum nach einem der Ansprüche 1-4, **dadurch gekennzeichnet, dass** die Stütze (3) derart abgewinkelt ist, dass der obere Teil der Stütze (3) nach innen zum Laderaum hin abgewinkelt ist, wenn der äussere Armteil (4b) zur Seite des Forwarders hineingeschwenkt wird, so dass der Laderaum im unteren Teil des Laderaums grösser ist als in seinem oberen Teil.

## Revendications

1. Espace de chargement sur un véhicule de transport du type porteur forestier, comprenant au moins un élément transversal porteur de charge, appelé support à grumes (1), et des unités de limitation latérale (2) agencées sur celui-ci, chaque unité de limitation latérale (2) comprenant un montant (3) attachée à un bras (4) orientable et verrouillable qui permet d'ajuster le montant (3) et de le bloquer dans différentes positions de sorte que la largeur de l'espace de chargement peut être variée,
**caractérisé en ce que** le bras (4) comprend
une partie intérieure (4a) qui constitue ou forme une partie de l'élément transversal (1) et est coudée dans le plan horizontal par rapport à la direction longitudinale de l'élément transversal,
une partie extérieure (4b) à laquelle le montant (3) est attaché,
une construction articulée (4c) qui relie les deux parties du bras (4a, 4b) et permet la rotation de la partie extérieure du bras (4b) par rapport à la partie intérieure du bras (4a) dans un plan horizontal.

2. Espace de chargement selon la revendication 1, **caractérisé en ce que** l'angle de fixation α et la longueur des deux parties (4a, 4b) du bras sont telles que le point de fixation (5) du montant dans toutes les positions de travail bloquées du montant est situé sur l'axe longitudinal de l'élément transversal.

3. Espace de chargement selon la revendication 1 ou 2, **caractérisé en ce que** la partie intérieure (4a) du bras est coudée vers l'avant de telle manière que l'extrémité articulée est en regard vers l'avant du porteur.

4. Espace de chargement selon l'une quelconque des revendications 1-3, **caractérisé en ce que** le blocage de la position d'une unité de limitation latérale (2) par rapport à l'élément transversal (1) peut céder légèrement, de sorte que l'unité (2) est déplaçable vers l'intérieur, en direction du porteur, lorsque des charges extérieures sont appliquées.

5. Espace de chargement selon l'une quelconque des revendications 1-4, **caractérisé en ce que** le montant (3) est coudée de telle manière que lorsque la partie extérieure (4b) du bras est rabattue vers le côté du porteur, la partie supérieure du montant (3) est inclinée vers l'intérieur de l'espace de chargement de sorte que l'espace de chargement est plus grand dans la partie inférieure de l'espace de chargement que dans sa partie supérieure.
